# EUROPEAN PATENT SPECIFICATION

(11) **EP 1 659 056 B1**
(45) Date of publication and mention of the grant of the patent: **09.06.2010**
(21) Application number: 05022394.0
(22) Date of filing: 13.10.2005
(51) Int. Cl.: B62M 3/00, B62K 19/34

(54) **Bicycle crank axle assembly**
Fahrradkurbeleinheit
Ensemble de pédalier pour bicyclette

(30) Priority: 18.11.2004 JP 2004334718
(43) Date of publication of application: 24.05.2006
(73) Proprietor: SHIMANO INC., Osaka 590-8577 (JP)
(72) Inventor: Yamanaka, Masahiro, Osaka 598-0002 (JP)
(74) Representative: Grosse - Schumacher - Knauer - von Hirschhausen

(56) References cited:
- EP-A2- 1 449 760
- DE-A1- 3 305 447
- DE-C- 841 703
- FR-A- 623 094
- JP-A- 2000 009 110
- US-A- 607 055
- US-A- 4 201 120
- US-A- 4 545 691
- US-A1- 2004 154 430

## Description

### BACKGROUND OF THE INVENTION

### Field of the Invention

This invention generally relates to a bicycle crank axle assembly. More specifically, the present invention relates to a bicycle crank axle assembly that is mounted on a hanger part of a bicycle frame.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well. One component that has been extensively redesigned is the bicycle crank axle assembly.

A bicycle crank axle assembly, which is called a bottom bracket, is usually mounted on a hanger part of a bicycle. A conventional crank axle assembly includes the first and second axle supporting members screwed on both axial ends of the hanger part separately. The first and second axle supporting members include first and second bearing retaining sections, respectively so that first and second bearings are disposed on the first and second bearing retaining sections of the first and second axle supporting members, and a crank axle is supported on the first and second axle bearings. A pair of right and left cranks is non-rotatably mounted on both axial end portions of the crank axle.

Japanese Laid-Open Patent Publication No. 2004-249770 discloses such conventional crank axle assembly in which the working force or bearing play of the first and second bearings are adjusted while the crank is mounted to the crank axle to reduce jounce in the axial direction. In such conventional crank axle assembly, the right gear crank is crimp-fastened to a right end of the crank axle. The inner rings of the first and second bearings are press-supported by inner edges of the right and left cranks, respectively, so that the first and second bearings can be pressed by the right and left cranks. The left crank is mounted on the crank axle by a bolt screwed to the inner circumference of the left end of the crank axle. When the left crank is mounted on the crank axle by the bolt, the right and left cranks push the inner rings of the first and second bearings inwardly as making contact with the axial outer surfaces of the inner rings. Thus, the jounce or misalignment in the axial direction can be reduced by adjusting the working force or bearing play by the adjusting the pressure imparted from the cranks to the first and second bearings.

In such conventional crank axle assembly, when the crank is taken off for maintenance or exchange, pressure on the bearings is released. Therefore, an adjustment of the bearing play is necessary every time the crank is attached and removed.

A further conventional crank axle assembly according to the preamble of claim 1 of the present invention is also disclosed in document DE 841 703.

In view of the above, it will be apparent to those skilled in the art from this disclosure that there exists a need for an improved bicycle crank axle assembly. This invention addresses this need in the art as well as other needs, which will become apparent to those skilled in the art from this disclosure.

### SUMMARY OF THE INVENTION

One object of the present invention is to provide a bicycle crank axle assembly in which the bearing play is adjustable by pressing the bearings by the crank, and which eliminates adjusting of the bearing play every time the crank is attached and removed.

This object is solved by a bicycle crank axle assembly adapted to be mounted on a hanger part of a bicycle frame, wherein the crank axle assembly comprises a first axle support member having a first bearing retaining section and a first mounting section configured and arranged to be non-rotatably mounted to a first end of the hanger part of the bicycle frame, a second axle support member having a second bearing retaining section and a second mounting section configured and arranged to be non-rotatably mounted to a second end of the hanger part of the bicycle frame, a pair of first and second bearings disposed in the first and second bearing retaining sections of the first and second axle support members, respectively, a crank axle mounted to the first and second axle support members with first and second axial end portions being rotatably supported by the first and second bearings, respectively; and a fixed member is disposed in the first axial end portion of the crank axle between the first crank and the first bearing, wherein the fixed member includes a washer part with a radial slit that is mounted to the crank axle and a screw part coupled to the washer part in a direction substantially perpendicular to the radial slit to adjust a width of the radial slit. The first axial end portion of the crank axle is configured and arranged to be coupled to a first crank so that the first and second bearings are pressed in an axial direction by the first crank, the fixed member abuts against both of the first bearing and the first crank, and the fixed member being configured and arranged to be selectively released from and fastened to the crank axle to maintain axial positions of the first and second bearings.

With the bicycle crank axle assembly of the present invention, the first and second axle supporting members are fixedly coupled to the hanger part of the bicycle frame and the crank axle is mounted to the first and second axle supporting members. The first and second cranks are mounted on the both axial ends of the crank axle while the fixed member is mounted between the first bearing and the first crank as the fixed member being in a released state. Then, the bearing play is adjusted by pressing the first and second bearings by the first and second cranks via the fixed member. When an adjustment of the bearing play is completed, the fixed member is fixed on the crank axle. Accordingly, the first and second bearings are pressed by the fixed member. Consequently, the state in which the bearing play is optimum can be maintained even if the first crank is released. Since the fixed member is releasably mounted on the crank axle between the first bearing and the first crank so that the fixed member abuts against both of the first bearing and the first crank, and since the fixed member is fixedly coupled to the crank axle after completing adjustment of the bearing play, once the bearing play is adjusted the bearing play is maintained by the fixed member. Therefore, once the bearing play is adjusted, there is no need to adjust the bearing play every time the first crank is attached and removed.

With the bicycle crank axle assembly in accordance with present claim 2, the bicycle crank axle assembly is further configured such that the first and second axle support members include first and second male screw sections disposed axially inwardly with respect to the first and second bearing retaining sections, respectively, and the first and second male screw sections are configured and arranged to be coupled to first and second female screw sections formed on the first and second ends of the hanger part of the bicycle frame. Therefore, since the first and second axle supporting members are screwed on the hanger part, the degree of fastened state of the first and second axle supporting members is more stabilized than a fastening method such as press fitting.

With the bicycle crank axle assembly in accordance with present claim 3, the bicycle crank axle assembly is further configured such that the first and second bearing retaining sections of the first and second axle support members are configured and arranged to be disposed axially outwardly with respect to the first and second ends of the hanger part, respectively. Therefore, since the bearings are disposed axially outwardly with respect to the hanger part, distance between the bearings is lengthened, and the rigidity of the crank axle can be improved.

With the bicycle crank axle assembly in accordance with present claim 4, the bicycle crank axle assembly is further configured such that the first and second bearing retaining sections of the first and second axle support members have a maximum diameter that is larger than a maximum diameter of the first and second mounting sections of the first and second axle support members, respectively. Therefore, since the diameter of the bearing retaining sections have a larger diameter than the mounting sections, acceptable load of the bearings becomes high.

With the bicycle crank axle assembly in accordance with present claim 5, the bicycle crank axle assembly is further configured such that the second axial end portion of the crank axle is configured and arranged to be integrally coupled with a second crank. Therefore, the bearing play can be easily adjusted by the first crank, and the weight of the crank axle assembly can be reduced by reducing the number of parts.

With the bicycle crank axle assembly in accordance with present claim 6, the bicycle crank axle assembly is further is provided with a connecting member concentrically connecting the first and second axle supporting members with an center axial bore formed therein so that the crank axle penetrates through the center axial bore. Therefore, the crank axle is guided from one of the axle supporting members to another by the connecting member by linking two the axle supporting members.

Accordingly, with the present invention, since the fixed member is releasably mounted to the crank axle between the bearing and the crank while the fixed member abuts against both of the bearing and the crank, and the fixed member is fastened on the crank axle after completing adjustment of the bearing play, once the bearing play is adjusted, the bearing play is maintained by the fixed member. Therefore, once the bearing play is adjusted, there is no need to adjust the bearing play every time a crank is attached and removed.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is an overall right side elevational view of a bicycle with a bicycle crank axle assembly in accordance with one embodiment of the present invention;
Figure 2 is a transverse cross sectional view of the bicycle crank axle assembly in accordance with the illustrated embodiment of the present invention;
Figure 3 is an enlarged partial cross sectional view of a left side portion of the bicycle crank axle assembly in accordance with the illustrated embodiment of the present invention; and
Figure 4 is a side elevational view of a fixed member of the bicycle crank axle assembly in accordance with the illustrated embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

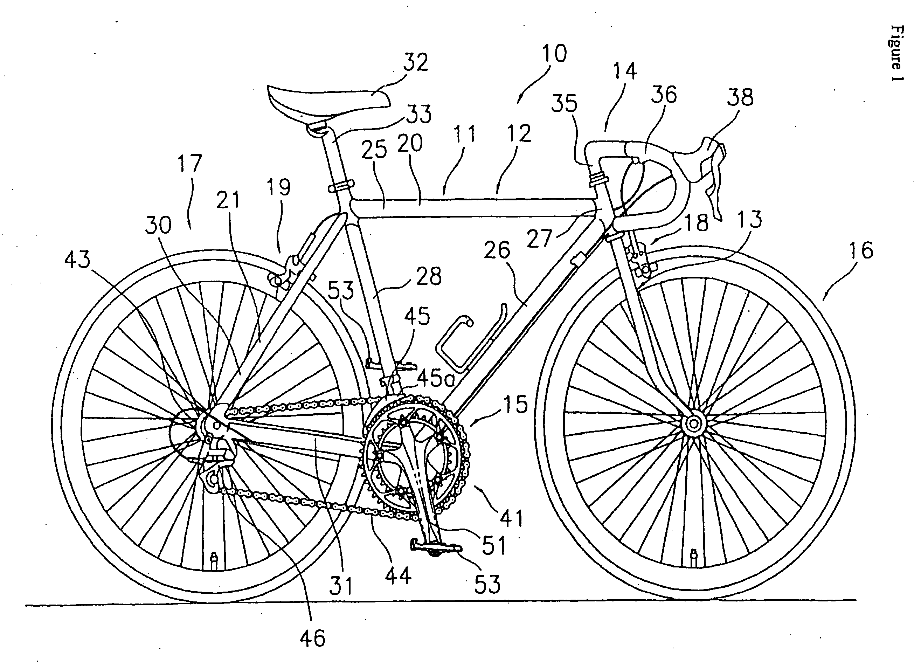

Referring initially to Figure 1, a bicycle 10 is illustrated that is equipped a front derailleur 45 in accordance with a first embodiment of the present invention. In this example, the bicycle 10 is a road bike that has a diamond-shaped frame 11. The frame 11 serves as the framework of the bicycle body. The frame 11 has a frame body 12 with a front fork 13 pivotally supported on a front part of the frame body 12 such that the front fork 13 can rotate freely about an axis that is tilted slightly from vertical. The lower or bottom part of the front fork 13 is divided into two prongs. The bicycle 10 is also provided with a drop-type handlebar unit 14 connected to the front fork 13, a drive unit 15 provided on a lower part of the frame body 12. The drive unit 15 is configured to convert pedaling force into driving force. A front wheel 16 is supported in a freely rotatable manner on the bottom end of the front fork 13, while a rear wheel 17 is supported in a freely rotatable manner on a rear part of the frame body 12. The bicycle 10 is also provided with a pair (front and rear) of brake devices 18 and 19.

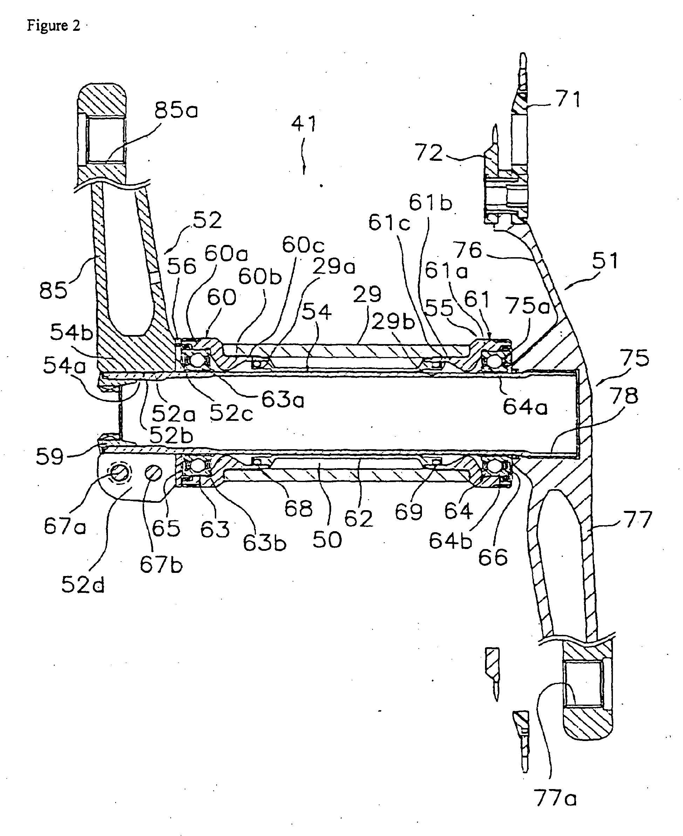

As seen in Figure 1, the frame body 12 has a triangularly shaped front triangle 20 and a triangularly shaped rear triangle 21 that is arranged rearward of the front triangle 20. The front triangle 20 is formed by a top tube 25, a down tube 26, a head tube 27, and a seat tube 28. The top tube 25 is arranged generally horizontally, while the down tube 26 is arranged below the top tube 25 such that it slants obliquely upward toward the front. The head tube 27 joins the front ends of the top tube 25 and the down tube 26 together. The seat tube 28 extends diagonally upward and joins the rear ends of the top tube 25 and the down tube 26 together. A seat post 33 has a saddle 32 fastened thereto. The seat post 33 is secured in the seat tube 28 such that its position can be vertically adjusted up and down. A cylindrical or tubular hanger 29 (shown in Figure 2) is formed at a connection portion where the seat tube 28 and the down tube 26 are joined together. The rear triangle 21 is formed by the seat tube 28, a pair of seat stays 30 and a pair of chain stays 31. The seat stays 30 are joined at their front ends to the seat tube 28 and extend diagonally downward as two separate prongs. The chain stays 31 also extend rearward as two separate prongs, but from the bottom end of the seat tube 28. The chain stays 31 are joined at their rear ends to the seat stays 30.

The handlebar unit 14 includes a handlebar stem 35 and a handlebar 36. The handlebar stem 35 of the handlebar unit 14 is fastened to the upper part of the front fork 13 in such a manner that it can be vertically moved up and down. The handlebar 36 is fixed at a horizontally extending center portion on a top edge of the handle stem 35 with both free ends having curved portions extending from the center portion. A brake lever 38 provided with a gear shifting capability is mounted on both ends of the handlebar 36.

The drive unit 15 basically includes a front crankset 41, a rear gear cassette unit 43, a chain 44, a front derailleur 45, and a rear derailleur 46. The front crankset 41 is provided on the hanger part 29 of the bicycle 10. The rear gear cassette unit 43 is mounted in a non-rotatable manner to the free hub of the rear wheel 17. The chain 44 is arranged on the front crankset 41 and the rear gear cassette unit 43 so as to span therebetween. The front derailleur 45 and the rear derailleur 46 function as gear changing devices. The front derailleur 45 has a chain guide 45a where the chain 44 is inserted.

As shown in Figures 1 and 2, the front crankset 41 basically includes a crank axle assembly 50, a right crank arm 51, a left crank arm 52, and a pair of pedals 53 (Figure 1). The crank axle assembly 50 preferably has a crank axle 54 rotatably supported on the hanger part 29 of the frame 11 by a bottom bracket 55 (e.g., a crank axle bearing assembly of this invention) that is fixedly mounted on the hanger part 29. The right and left crank arms 51 and 52 are removably fastened to the right and left ends of the crank axle 54 with the pedals 53 mounted to the tip or free ends of the right and left crank arms 51 and 52. The crank axle assembly 50 is securely retained in the hanger part 29 of the frame 11 by a fixed member 56 as discussed below.

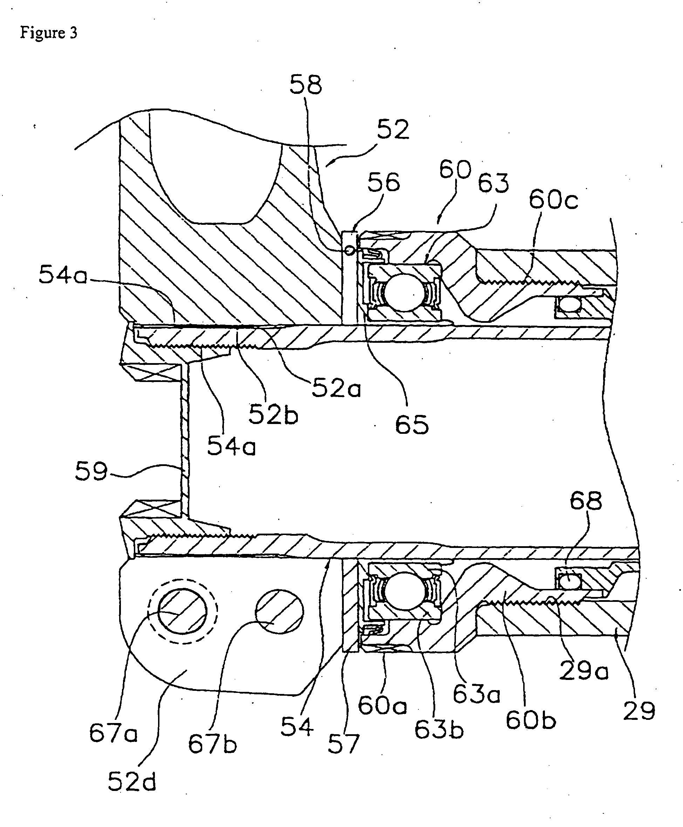

The crank axle 54 is preferably an alloy hollow pipe-shaped member that is highly rigid such as chrome molybdenum steel. In addition, as shown in Figure 3, the left end portion of the crank axle 54 includes a female (internal threads) screw part 54a and a plurality of external serrations 54b. The female (internal threads) screw part 54a is disposed on an inner circumferential surface of the left end portion of the crank axle 54 so that a fixed bolt 59 is screwed into the female screw part 54a to fasten the left crank arm 52. The serrations 54b is provided on the outer circumferential surface of the left end portion of the crank axle 54 to non-rotatably link the left crank arm 52 thereon.

The bottom bracket 55 includes a pair (right and left) of bearing housings The bottom bracket 55 includes a pair (right and left) of axle bearing housings (e.g., the first and second axle supporting members) 60 and 61, a tube-shaped connecting member 62, a pair (right and left) of axle bearings 63 and 64, and a pair (right and left) of cover members 65 and 66. The axle bearing housings 60 and 61 are screwed in from both ends of the hangar part 29. The tube-shaped connecting member 62 concentrically links the right and left axle bearing housings 60 and 61. The right and left axle bearings 63 and 64 are mounted on the right and left axle bearing housings 60 and 61. The right and left cover members 65 and 66 are mounted between the crank axle 54 and inner rings of right and left axle bearings 63 and 64. In this embodiment, the left axle bearing 64 constitutes a first bearing and the right axle bearing 63 constitutes a second axle bearing.

The right and left axle bearing housings 60 and 61 are shoulder tube-shaped members that include a pair (right and left) of bearing retaining sections 60a and 61 a, respectively, and a pair (right and left) of mounting sections 60b and 61b, respectively. The axle bearings 63 and 64 are retained and stored separately in the bearing retaining sections 60a and 61a. The right and left mounting sections 60b and 61b are placed in alignment with the bearing retaining sections 60a and 61 a, respectively, and non-rotatably mounted on the axial end portions of the hanger part 29. The bearing retaining sections 60a and 61a are disposed axially outwardly with respect to the mounting sections 60b and 61b and have a larger maximum diameter than the mounting sections 60b and 61b as seen in Figure 2. The hanger part 29 includes the female screw parts 29a and 29b on the inner circumference on its both right and left edges, and the mounting sections 60b and 61b include male screw parts 60c and 61 c that are placed axially inwardly with respect to the bearing retaining sections 60a and 61a so that the male screw parts 60c and 61 c of the mounting sections 60b and 61b are screwed with the female screw parts 29a and 29b, respectively. In order to prevent the screws from becoming loose by rotation of the cranks, the left female screw part 29a is preferably right-hand screw threads, and the right female screw part 29b is preferably left-hand screw threads. Therefore, the male screw part 60c that screws into the left female screw part 29a is preferably right-hand screw threads, and the male screw part 61 c is preferably left-hand screw threads.

The connecting part 62 is a tubular member that has an inside diameter that the crank axle 54 can penetrate therethrough. The connecting part 62 is coupled to inner edges of the mounting sections 60b and 61b of the right and left axle bearing housings 60 and 61 at axial ends thereof. Two O rings 68 and 69 are preferably mounted on connecting parts of the connecting member 62 and the axle bearing housings 60 and 61, respectively as seen in Figure 2.

The axle bearings 63 and 64 are preferably ball bearings or roller bearings that include inner rings 63a and 64a and outer rings 63b and 64b with a plurality of ball bearing disposed therebetween. The axle bearings 63 and 64 are disposed so that movements of the inner rings 63a and 64a toward outside in the axial direction (the axle bearing 63 is on the left in Figure 2, and the axle bearing 64 is on the right in Figure 2) is restricted by the right and left crank arms 51 and 52 via the cover members 66 and 65 respectively, and movements of the outer rings 63b and 64b toward the inside in the axial direction (the axle bearing 63 is on the left in Figure 2, and the axle bearing 64 is on the right in Figure 2) is restricted by the axle bearing housings 60 and 61, respectively. The axle bearings 63 and 64 are preferably sealed bearings where seals are mounted between the inner rings 63a and 64a and the outer rings 63b and 64b, respectively, and grease is inserted in the axle bearings 63 and 64 in advance. Therefore, maintenance of the axle bearings 63 and 64 for lubrication can be omitted. Accordingly, with the arrangement of the crank axle assembly 50 as described above, the axis diameter of the crank axle 54 can be lengthened by placing the axle bearings 63 and 64 on the outside of the hanger part 29 in the axial direction. Therefore, the weight of the crank axle assembly 50 can be reduced by making the crank axle 54 hollow while the strength and rigidity of the crank axle 54 can be maintained at a high level.

The cover members 65 and 66 are, for example, hard resin members that cover the circumference surfaces on the axle bearing housings 60 and 61. The cover members 65 and 66 are disposed so that the cover members 65 and 66 are sandwiched by the left and right cranks 52 and 51 and the inner rings 63a and 64a of the axle bearings 63 and 64, respectively.

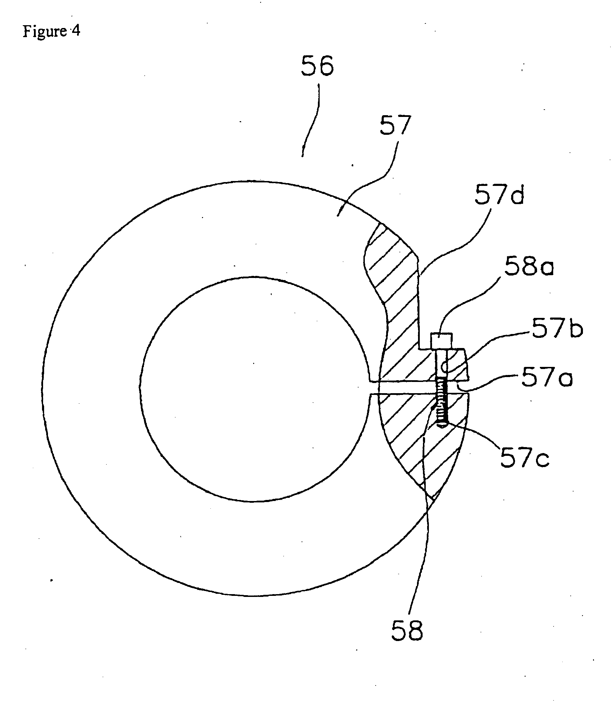

The fixed member 56, as shown in Figures 3 and 4, includes a washer part 57 with a radial slit 57a and a screw part 58 that is disposed perpendicularly to the radial slit 57a to adjust a width of the radial slit 57a. The washer part 57 has a slightly larger inside diameter than the outside diameter of the crank axle 54 and is placed between the left crank arm 52 and the axle bearing 63 to be in contact with both of the left crank arm 52 and the axle bearing 63. The radial slit 57a is preferably approximately 1 mm through approximately 5 mm wide. A through-hole 57b that the screw part 58 can penetrate and a screw hole 57c that the screw part 58 is screwed to are formed perpendicularly to the radial slit 57a across the radial slit 57a on the washer part 57. In addition, a groove part 57d in which a head portion 58b of the screw part 58 is disposed is formed around the through hole 57b as seen in Figure 4. The screw part 58, for example, is preferably a hexagon socket head bolt.

As seen in Figure 2, the right crank arm 51 is a gear crank that has a pair of chain rings or sprockets 71 and 72 mounted thereon in a removable manner. The right crank arm 51 includes a crank connecting part 75, a plurality of arm parts 76, and a right crank arm part 77. The crank connecting part 75 has a mounting recessed part 78 that is formed with a tube-shaped space and non-rotatably mounted on the right edge of the crank axle 54. The arm parts 76 (five arm parts 76 are provided in this embodiment) can mount the sprockets 71 and 72 on their free ends and radially extend from the crank connecting part 75. The right crank arm part 77 is fixedly coupled on the right edge of the crank axle 54 and a pedal mounting hole 77a is formed on its free end. An inner edge surface 75a in the axial direction of the connecting part 75 of the right crank arm 51 is disposed to press the inner ring 64a of the axle bearing 64 via the cover member 66.

The left crank arm 52, as shown in Figures 2-4, includes a hollow left crank arm part 85 with a pedal mounting hole 85a on its free end where the pedal 53 is screwed on. The left crank arm 52 includes a connecting hole 52a that is non-rotatably connected on the crank axle 54 in the center portion. In particular, the connecting hole 52 has a plurality of serrations 52b so that the left crank arm 52 is non-rotatably coupled to the crank axle 54 at a certain rotational phase by with between the serrations 54b formed on the crank axle 54. The inner ring 63a of the axle bearing 63 is pressed on the inner edge surface 52c in the axial direction of the left crank arm 52 via the cover member 65 and the fixed member 56. The left crank arm 52 is fixedly coupled to the crank axle 54 by the fixed bolt 59 that is screwed on the female screw part 54a of the crank axle 54. The crank axle assembly 50 is configured and arranged such that the axle bearings 63 and 64 are pressed with the left and right cranks 52 and 51 by screwing the fixed bolt 59. Accordingly, the bearing play of the axle bearings 63 and 64 can be adjusted. The slit 52d is formed on the connecting hole 52a of the left crank arm 52 that is mounted on the crank axle 54. The left crank arm 52 is strongly fixed on the crank axle 54 by tightening up two mounting bolts 67a and 67b that are located on the bottom of the crank axle 54 as seen in Figure 2. Thus, the slit width of the slit 52d is narrowed by tightening the mounting bolts 67a and 67b that extend across the slit 52d to strongly fix the left crank arm 52 on the crank axle 54. These two mounting bolts 67a and 67b are, for example, hexagon socket head bolts, and their heads are preferably inserted from different directions.

When the crank axle assembly 50 of the present invention as described above is mounted on the hanger part 29, first, the axle bearings 63 and 64 and the cover members 65 and 66 are mounted on the right and left axle bearing housings 60 and 61. In addition, the connecting member 62 is mounted on one of the axle bearing housings 60 and 61. In this state, the axle bearing housings 60 and 61 are screwed to the female screw parts 29a and 29b of the hanger part 29, respectively, with torque of a certain range. Next, the gear crank arm 51 to which the crank axle 54 is fixedly coupled is inserted from the side of the axle bearing housing 61. After the fixed member 56 is coupled on an edge of the crank axle 54 that is projected from the left axle bearing housing 60, the left crank arm 52 is mounted with a rotational phase varying by 180 degrees from the right crank arm 51. At this time, the screw part 58 of the fixed member 56 is in a loosened state so that the fixed member 56 is releasable. Thus, the fixed member 56 is movable in the axial direction on the circumference of the crank axle 54. The serrations 52b and 54b are provided with prescribed recess portion and projection portion (not shown in figures) that is longer in the circumferential direction than others to place the right crank arm 51 and the left crank arm 52 with a rotational phase of 180 degrees apart. Therefore, both of the cranks 52 and 51 are placed with a rotational phase of 180 degrees apart by locking the prescribed recess portion and projection portion.

The fixed bolt 59 is mounted on the crank axle 54, and the left crank arm 52 is fixed on the crank axle 54 in this state. When the fixed bolt 59 is tightened, the crank axle 54 moves to the left in Figure 2, and the inner edge surfaces 75a and 52c of the right and left cranks 51 and 52 press the inner rings 63a and 64a of the axle bearings 63 and 64, respectively, via the cover members 65 and 66 and the fixed member 56. An adjustment of the bearing play to reduce misalignment of the right and left side of the crank axle 54 can be performed by adjusting the degree of pressure by mounting the left crank arm 52. After adjusting the bearing play, the screw part 58 of the fixed member 56 is tightened up to fixedly couple the fixed member 56 on the circumference surface of the crank axle 54. Thus, even if the left crank arm 52 is taken off by loosening the fixed bolt 59, the bearing play is maintained, and readjustment of the bearing play is unnecessary. Finally, the mounting bolts 67a and 67b of the left crank arm 52 are tightened up to fasten the left crank arm 52 securely onto the crank axle 54.

The bearing play is maintained by the fixed member 56 once it is adjusted because the fixed member 56 that can be fixed and released from the crank axle 54 is provided between the axle bearing 63 and the left crank arm 52 so that the fixed member 56 abuts against both of the left crank arm 52 and the axle bearing 63 (via the cover member 65). Therefore, the fixed member 56 can be fixed on the crank axle 54 after completing the bearing roll. Therefore, once the bearing play is adjusted, there is no need to adjust the bearing play every time the left crank arm 52 is attached and removed.

In the above described embodiment, the axle bearing housings 60 and 61 are screwed to the hanger part 29. However, the present invention can be adapted to a crank axle assembly that includes bearing housings press-fitted in a hanger part as long as the bearing play of the bearings can be adjusted when the crank is mounted.

In the above described embodiment, the crank axle assembly 50 for the road bike 10 is described as an example. Of course, it will be apparent to those skilled in the art from this disclosure that a crank axle assembly of the present invention can be adapted to all types of bicycles.

In the above described embodiment, the bearing retaining sections 60a and 6 1 b are disposed axially outwardly with respect to the hanger part 29. However, the bearing retaining sections may be disposed axially inwardly with respect to the hanger part.

In the above described embodiment, the fixed member 56 comprises the washer part 57 with the radial slit 57a and the screw part 58. Of course, it will be apparent to those skilled in the art from this disclosure that the fixed member can be configured and arranged, for example, to include a pair of half ring members and two screw members that link the half ring members.

In the above described embodiment, the right crank arm 51 is integrally coupled to the crank axle 54. Of course, it will be apparent to those skilled in the art from this disclosure that the crank axle assembly of the present invention can be configured and arranged such that the right crank is linked on the crank axle by a bolt.

In the above described embodiment, the cranks 51 and 52 press the bearings 61 and 60 via the cover members 66 and 65, respectively, and the fixed member 56. However, the crank axle assembly of the present invention can be configured and arranged such that the cranks press the bearings directly and via the fixed member.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle crank axle assembly (50) adapted to be mounted on a hanger part (29) of a bicycle frame (11), comprising:
a first axle support member (60) having a first bearing retaining section (60a) and a first mounting section (60b) configured and arranged to be non-rotatably mounted to a first end of the hanger part (29) of the bicycle frame;
a second axle support member (61) having a second bearing retaining section (61 a) and a second mounting section (61 b) configured and arranged to be non-rotatably mounted to a second end of the hanger part (29) of the bicycle frame;
a pair of first and second bearings (63, 64) disposed in the first and second bearing retaining sections (60a, 61a) of the first and second axle support members (60, 61), respectively;
a crank axle (54) mounted to the first and second axle support members (60, 61) with first and second axial end portions being rotatably supported by the first and second bearings (63, 64), respectively;
a first crank (52) and
a fixed member (56) being disposed in the first axial end portion of the crank axle (54) between the first crank (52) and the first bearing (63), the fixed member (56) includes a washer part (57) with a radial slit (57a) that is mounted to the crank axle (54) and a screw part (58) coupled to the washer part (57) in a direction substantially perpendicular to the radial slit (57a) to adjust a width of the radial slit, the fixed member (56) being configured and arranged to be selectively released from and fastened to the crank axle (54) to maintain axial positions of the first and second bearings (63, 64),
**characterized in that**
the first axial end portion of the crank axle (54) being configured and arranged to be coupled to the first crank (52) so that the first and second bearings (63, 64) are pressed in an axial direction by the first crank (52), and
the fixed member (56) abuts against both of the first bearing (63) and the first crank (52).

2. The bicycle crank axle assembly (50) as recited in claim 1, wherein
the first and second axle support members (60, 61) include first and second male screw sections (60c, 61c) disposed axially inwardly with respect to the first and second bearing retaining sections (60a, 61a), respectively, the first and second male screw sections (60c, 61c) being configured and arranged to be coupled to first and second female screw sections (29a, 29b) formed on the first and second ends of the hanger part (29) of the bicycle frame.

3. The bicycle crank axle assembly (50) as recited in claim 1, wherein
the first and second bearing retaining sections (60a, 61 a) of the first and second axle support members (60, 61) are configured and arranged to be disposed axially outwardly with respect to the first and second ends of the hanger part (29), respectively.

4. The bicycle crank axle assembly (50) as recited in claim 3, wherein
the first and second bearing retaining sections (60a, 61 a) of the first and second axle support members (60, 61) have a maximum diameter that is larger than a maximum diameter of the first and second mounting sections (60b, 61 b) of the first and second axle support members (60, 61), respectively.

5. The bicycle crank axle (54) assembly (50) as recited in claim 1, wherein
the second axial end portion of the crank axle (54) is configured and arranged to be integrally coupled with a second crank (51).

6. The bicycle crank axle (54) assembly (50) as recited in claim 1, further comprising a connecting member (62) concentrically connecting the first and second axle support members (60, 61) with an center axial bore formed therein so that the crank axle,(54) penetrates through the center axial bore.

## Patentansprüche

1. Fahrradkurbelachsenbaugruppe (50), die ausgebildet ist, um an einem Tretlageraufnahmeteil (29) eines Fahrradrahmens (11) montiert zu werden, aufweisend:
ein erstes Achsenträgerelement (60), das einen ersten Lagerrückhalteabschnitt (60a) und einen ersten Montierabschnitt (60b) aufweist, der konfiguriert und angeordnet sind, um an einem ersten Ende des Tretlageraufnahmeteils (29) des Fahrradrahmens nichtdrehbar montiert zu werden;
ein zweites Achsenträgerelement (61), das einen zweiten Lagerrückhalteabschnitt (61 a) und einen zweiten Montierabschnitt (61 b) aufweist, der konfiguriert und angeordnet ist, um an einem zweiten Ende des Tretlageraufnahmeteils (29) des Fahrradrahmens nichtdrehbar montiert zu werden;
ein Paar von ersten und zweiten Lagern (63, 64), die in den ersten und zweiten Lagerrückhalteabschnitten (60a, 61 a) der ersten bzw. zweiten Achsenträgerelemente (60, 61) angeordnet sind;
eine Kurbelachse (54), die an den ersten und zweiten Achsenträgerelementen (60, 61) montiert ist, wobei erste und zweite axiale Endabschnitte durch die ersten bzw. zweiten Lager (63, 64) drehbar gelagert sind;
eine erste Kurbel (52); und
ein feststehendes Element (56), das im ersten axialen Endabschnitt der Kurbelachse (54) zwischen der ersten Kurbel (52) und dem ersten Lager (63) angeordnet ist, wobei das feststehende Element (56) einen Scheibenteil (57) mit einem radialen Schlitz (57a), der an der Kurbelachse (54) montiert ist, und einen Schraubenteil (58) beinhaltet, der mit dem Scheibenteil (57) in Richtung im Wesentlichen senkrecht zum radialen Schlitz (57a) verbunden ist, um eine Breite des radialen Schlitzes einzustellen,
wobei das feststehende Element (56) konfiguriert und angeordnet ist, um wahlweise von der Kurbelachse (54) gelöst und an dieser befestigt zu werden, damit Axialpositionen der ersten und zweiten Lager (63, 64) beibehalten werden,
**dadurch gekennzeichnet, dass**
der erste axiale Endabschnitt der Kurbelachse (54) konfiguriert und angeordnet ist um mit der ersten Kurbel (52) so verbunden zu werden, dass die ersten und zweiten Lager (63, 64) mittels der ersten Kurbel (52) in axialer Richtung gedrückt werden, und
das feststehende Element (56) sowohl gegen das erste Lager (63) als auch die erste Kurbel (52) ansteht.

2. Fahrradkurbelachsenbaugruppe (50) nach Anspruch 1, bei der die ersten und zweiten Achsenträgerelemente (60, 61) erste und zweite Außengewindeabschnitte (60c, 61c) beinhalten, die axial innerhalb bezüglich der ersten bzw. zweiten Lagerrückhalteabschnitte (60a, 61 a) angeordnet sind, wobei die ersten und zweiten Außengewindeabschnitte (60c, 61c) konfiguriert und angeordnet sind, um mit ersten und zweiten Innengewindeabschnitten (29a, 29b) verbunden zu werden, die an den ersten und zweiten Enden des Tretlageraufnahmeteils (29) des Fahrradrahmens ausgebildet sind.

3. Fahrradkurbelachsenbaugruppe (50) nach Anspruch 1, bei der die ersten und zweiten Lagerrückhalteabschnitte (60a, 61a) der ersten und zweiten Achsenträgerelemente (60, 61) konfiguriert und angeordnet sind, um axial außerhalb bezüglich der ersten bzw. zweiten Enden des Tretlageraufnahmeteils (29) angeordnet zu werden.

4. Fahrradkurbelachsenbaugruppe (50) nach Anspruch 3, bei der die ersten und zweiten Lagerrückhalteabschnitte (60a, 61a) der ersten und zweiten Achsenträgerelemente (60, 61) einen maximalen Durchmesser haben, der größer als ein maximaler Durchmesser der ersten und zweiten Montierabschnitte (60b, 61 b) der ersten bzw. zweiten Achsenträgerelemente (60, 61) ist.

5. Fahrradkurbelachsenbaugruppe (50) nach Anspruch 1, bei der der zweite axiale Endabschnitt der Kurbelachse (54) konfiguriert und angeordnet ist, um mit einer zweiten Kurbel (51) integral verbunden zu werden.

6. Fahrradkurbelachsenbaugruppe (50) nach Anspruch 1, weiter aufweisend
ein Verbindungselement (62), das die ersten und zweiten Achsenträgerelemente (60, 61) konzentrisch verbindet, wobei in diesem eine Axialmittelbohrung ausgebildet ist, so dass die Kurbelachse (54) durch die Axialmittelbohrung hindurch verläuft.

## Revendications

1. Ensemble d'axe de pédalier de bicyclette (50) adapté pour être monté sur une partie de suspension (29) d'un cadre de bicyclette (11), comprenant :
un premier élément de support d'axe (60) ayant une première section de retenue de palier (60a) et une première section de montage (60b) configurée et agencée pour être montée de manière non rotative sur une première extrémité de la partie de suspension (29) du cadre de bicyclette ;
un deuxième élément de support d'axe (61) ayant une deuxième section de retenue de palier (61a) et une deuxième section de montage (61 b) configurée et agencée pour être montée de manière non rotative sur une deuxième extrémité de la partie de suspension (29) du cadre de bicyclette ;
une paire de premier et deuxième paliers (63, 64) disposés respectivement dans les première et deuxième sections de retenue de palier (60a, 61 a) des premier et deuxième éléments de support d'axe (60, 61) ;
un axe de pédalier (54) monté sur les premier et deuxième éléments de support d'axe (60, 61), des première et deuxième portions d'extrémité axiales étant respectivement supportées en rotation par les premier et deuxième paliers (63, 64) ;
une première manivelle (52) ; et
un élément fixe (56) disposé dans la première portion d'extrémité axiale de l'axe de pédalier (54) entre la première manivelle (52) et le premier palier (63), l'élément fixe (56) inclut une partie de rondelle (57) dotée d'une fente radiale (57a) qui est montée sur l'axe de pédalier (54) et une partie de vis (58) couplée à la partie de rondelle (57) dans une direction sensiblement perpendiculaire à la fente radiale (57a) pour régler une largeur de la fente radiale, l'élément fixe (56) étant configuré et agencé pour être libéré de l'axe de pédalier (54) et fixé sur l'axe de pédalier (54), de manière sélective, afin de maintenir des positions axiales des premier et deuxième paliers (63, 64),
**caractérisé en ce que**
la première portion d'extrémité axiale de l'axe de pédalier (54) est configurée et agencée pour être couplée à la première manivelle (52) de sorte que les premier et deuxième paliers (63, 64) soient pressés dans une direction axiale par la première manivelle (52), et
l'élément fixe (56) vient buter à la fois contre le premier palier (63) et la première manivelle (52).

2. Ensemble d'axe de pédalier de bicyclette (50) selon la revendication 1, dans lequel
les premier et deuxième éléments de support d'axe (60, 61) incluent des première et deuxième sections de vis mâle (60c, 61c) disposées axialement vers l'intérieur par rapport respectivement aux première et deuxième sections de retenue de palier (60a, 61 a), les première et deuxième sections de vis mâle (60c, 61c) étant configurées et agencées pour être couplées à des première et deuxième sections de vis femelle (29a, 29b) formées sur les première et deuxième extrémités de la partie de suspension (29) du cadre de bicyclette.

3. Ensemble d'axe de pédalier de bicyclette (50) selon la revendication 1, dans lequel
les première et deuxième sections de retenue de palier (60a, 61a) des premier et deuxième éléments de support d'axe (60, 61) sont configurées et agencées pour être disposées axialement vers l'extérieur par rapport respectivement aux première et deuxième extrémités de la partie de suspension (29).

4. Ensemble d'axe de pédalier de bicyclette (50) selon la revendication 3, dans lequel
les première et deuxième sections de retenue de palier (60a, 61a) des premier et deuxième éléments de support d'axe (60, 61) ont un diamètre maximal qui est supérieur à un diamètre maximal des première et deuxième sections de montage (60b, 61 b) des premier et deuxième éléments de support d'axe (60, 61) respectivement.

5. Ensemble (50) d'axe de pédalier (54) de bicyclette selon la revendication 1, dans lequel
la deuxième portion d'extrémité axiale de l'axe de pédalier (54) est configurée et agencée pour être couplée d'un bloc à la deuxième manivelle (51).

6. Ensemble (50) d'axe de pédalier (54) de bicyclette selon la revendication 1, comprenant en outre
un élément de raccordement (62) raccordant de manière concentrique les premier et deuxième éléments de support d'axe (60, 61), dans lequel un trou central axial est formé afin que l'axe de pédalier (54) traverse le trou central axial.
